(19) Europäisches Patentamt / European Patent Office / Office européen des brevets

(11) **EP 4 265 820 A1**

(12) **EUROPEAN PATENT APPLICATION**
published in accordance with Art. 153(4) EPC

(43) Date of publication:
**25.10.2023 Bulletin 2023/43**

(21) Application number: **21907170.1**

(22) Date of filing: **17.12.2021**

(51) International Patent Classification (IPC):
$C23C\ 22/06^{(2006.01)}$    $C23C\ 28/00^{(2006.01)}$
$C23C\ 2/26^{(2006.01)}$    $C23C\ 2/06^{(2006.01)}$
$C23C\ 2/40^{(2006.01)}$    $C23F\ 11/18^{(2006.01)}$

(52) Cooperative Patent Classification (CPC):
C23C 2/26; C23C 2/06; C23C 2/40; C23C 22/06;
C23C 28/00; C23F 11/18

(86) International application number:
**PCT/KR2021/019315**

(87) International publication number:
**WO 2022/131866 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2020 KR 20200179011**

(71) Applicants:
• **POSCO Co., Ltd**
  **Pohang-si, Gyeongsangbuk-do 37859 (KR)**
• **Unicoh Specialty Chemicals Co., Ltd**
  **Pohang-si, Gyeongsangbuk-do 37865 (KR)**

(72) Inventors:
• **CHOI, Changhoon**
  **Pohang-si Gyeongsangbuk-do 37859 (KR)**
• **KIM, Jongkook**
  **Pohang-si Gyeongsangbuk-do 37859 (KR)**
• **SONG, Hocheol**
  **Pohang-si Gyeongsangbuk-do 37865 (KR)**

(74) Representative: **Meissner Bolte Partnerschaft
mbB
Patentanwälte Rechtsanwälte
Postfach 86 06 24
81633 München (DE)**

(54) **COMPOSITION FOR SURFACE TREATMENT OF STEEL SHEET AND STEEL SHEET USING SAME**

(57) Disclosed are: a composition for surface treatment capable of imparting to a steel sheet, plate corrosion resistance, corrosion resistance of processed parts, pit corrosion resistance, blackening resistance, pipe forming oil infiltration, and alkali resistance, and improving foreign-matter defects; and a steel sheet using same. The composition for surface treatment of a steel sheet according to the present invention comprises: a trivalent chromium compound; and adhesiveness improving agent containing a silane compound; an acidity modifier including acids; a crosslinking agent containing a silicate compound; a vanadium-based pit corrosion-improving agent; a polymer resin; and a solvent.

FIG. 1

EP 4 265 820 A1

**Description**

[Technical Field]

The present invention relates to a composition for surface treatment of a steel sheet, including a trivalent chromium compound, and a steel sheet using the same.

[Background Art]

Since highly corrosion-resistant hot-dip plated materials include zinc (Zn), magnesium (Mg), and aluminum (Al), they are known as materials with excellent red rust resistance.

However, since an exposed surface of a highly corrosion-resistant hot-dip plated material mostly consists of Zn or a Zn alloy, when exposed to a humid atmosphere, the highly corrosion-resistant hot-dip plated material easily has point-like corrosion defects on its surface, resulting in poor appearance.

In addition, recently, in a toll processing process, as the highly corrosion-resistant hot-dip plated material passes through a roll, foreign matter defects occur so the plated material component is stained on the roll.

To solve these problems, conventionally, corrosion resistance and blackening are secured through chromate treatment for forming a coating film by inputting a plated steel sheet into a solution having hexavalent chromium as a main component.

However, as hexavalent chromium is designated as a harmful environmental material and a carcinogen, regulations on the use of hexavalent chromium are currently being tightened.

Meanwhile, since bivalent chromium, tetravalent chromium, and pentavalent chromium are relatively unstable, they are rarely applied to the composition of a surface treatment solution.

Recently, a method of securing corrosion resistance and blackening resistance of a plated steel sheet by coating a steel sheet with the composition for a surface treatment solution, which contains trivalent chromium that has low toxicity and is stable, is applied.

For example, in Korean Unexamined Patent Application Nos. 10-2006-0123628, 10-2005-0052215 and 10-2009-0024450, corrosion resistance and blackening are secured through a chemical conversion coating method of immersing a steel sheet in a composition containing trivalent chromium.

However, the chemical conversion coating method has problems of a long immersion time and deterioration in fingerprint resistance to be applied to a continuous process of a steel manufacturer.

In addition, in Korean Unexamined Patent Application No. 10-2004-0046347, and Japanese Laid-Open Patent Application No. 2002-069660, a composition containing trivalent chromium is coated on a steel sheet in a drawing through a spraying or roll coater method, so it can be applied to a continuous process of a steel manufacturer and secure fingerprint resistance.

However, since the composition includes a porous silica component having a strong moisture absorbing property, it may cause rapid discoloration in a Mg-, Al-, or Zn-alloy steel sheet.

[Disclosure]

[Technical Problem]

The present invention is directed to providing a composition for surface treatment of a steel sheet, which enables a steel sheet to improve plate corrosion resistance, processed part corrosion resistance, pitting corrosion resistance, and foreign matter defects.

The present invention is also directed to providing a composition for surface treatment of a steel sheet, which allows a steel sheet to improve blackening resistance, pipe-forming oil infiltration, and alkali resistance.

The present invention is also directed to providing a steel sheet which has excellent corrosion resistance, excellent blackening resistance, excellent pipe forming oil infiltration, and excellent alkali resistance, and improved foreign matter defects.

The objects of the present invention are not limited to the above-mentioned objects, and other objects and advantages of the present invention which are not mentioned can be understood by the following description and more clearly understood by exemplary embodiments of the present invention. In addition, it will be readily apparent that the objects and advantages of the present invention may be realized by means determined by the claims and a combination thereof.

[Technical Solution]

A composition for surface treatment of a steel sheet according to the present invention includes a trivalent chromium compound; an adhesion-improving agent including a saline compound; an acidity regulator including an acid; a crosslinking agent including a silicate compound; a vanadium-based pitting corrosion-improving agent; a polymer resin; and a solvent.

A steel sheet according to the present invention includes a steel sheet base material; a zinc plating layer disposed on the steel sheet base material; and a surface treatment layer disposed on the zinc plating layer, wherein the surface treatment layer includes a trivalent chromium compound, an adhesion-improving agent including a silane compound, an acidity regulator including an acid, a crosslinking agent including a silicate compound, a vanadium-based pitting corrosion-improving agent, and a polymer resin.

[Advantageous Effects]

A steel sheet according to the present invention has an effect of improving plate corrosion resistance, processed part corrosion resistance, pitting corrosion resistance, and foreign matter defects.

In addition, the steel sheet according to the present invention has excellent effects on blackening resistance, pipe-forming oil infiltration, and alkali resistance.

In addition, the steel sheet according to the present invention has an effect of improving the lifetime of a product and solving problems generated in a distribution process such as the toll processing of the steel sheet.

In addition to the above effects, specific effects of the present invention will be described together while explaining specific details for carrying out the present invention.

[Description of Drawings]

FIG. 1 is a set of photographs of a highly corrosion-resistant plated steel sheet (left) in which pitting corrosion occurs and a highly corrosion-resistant plated steel sheet (right) which is coated with a composition for surface treatment of the present invention.

FIG. 2 is a photograph of the microstructure of a surface treatment layer (coating layer) of the present invention.

FIG. 3 shows the result of EDS component analysis of a surface treatment layer (coating layer) of the present invention.

[Modes of the Invention]

The above-described objects, features and advantages will be described below in detail with reference to the accompanying drawings, and accordingly, the technical spirit of the present invention will be easily implemented by those of ordinary skill in the art to which the present invention belongs. To explain the present invention, when detailed description on the related art is determined to unnecessarily obscure the subject matter of the present invention, the detailed description will be omitted. Hereinafter, exemplary embodiments of the present invention will be described in detail with reference to the accompanying drawings. In the drawings, like reference numerals are used to indicate the same or similar components.

Hereinafter, the placement of an arbitrary element above (or below) or on (or under) another element may mean that not only an arbitrary element is placed in contact with the top surface (or the bottom surface) of another element, but also a third element is interposed between a first element and a second element placed on (or under) the first element.

Hereinafter, a composition for surface treatment of a steel sheet and a steel sheet using the same according to some embodiments of the present invention will be described.

As the components and composition ratio of a composition for surface treatment, which is coated on the surface of a highly corrosion-resistant plated steel sheet in the present invention, were adjusted, the external corrosion resistance of the steel sheet was improved and foreign matter defects are improved, so not only the lifetime of a product is improved but also problems generated in a distribution process such as toll processing of the steel sheet are solved.

In addition, the composition for surface treatment of the present invention includes a trivalent chromium compound with low toxicity, instead of a hexavalent chromium compound, which is a harmful environmental material and carcinogen, and thus has the effect of preventing problems such as damage to the human body and environmental pollution.

In addition, since the composition for surface treatment of a steel sheet according to the present invention does not include a porous silica element, it has the effect of preventing a phenomenon that causes rapid discoloration.

The composition for surface treatment of a steel sheet according to the present invention includes a trivalent chromium compound, an adhesion-improving agent including a silane compound, an acidity regulator including an acid, a crosslinking agent including a silicate compound, a vanadium-based pitting corrosion-improving agent, a polymer resin, and a solvent.

The trivalent chromium compound has low toxicity and is stable, and usually forms an insoluble coating film on the surface of the steel sheet to provide corrosion resistance by a barrier effect.

The trivalent chromium compound may be included at 0.5 to 17 parts by weight with respect to 100 parts by weight of the solvent. With respect to 100 parts by weight of the solvent, the trivalent chromium compound is preferably included at 0.8 to 17 parts by weight, 1 to 16 parts by weight, 1.1 to 16.9 parts by weight, 1.2 to 16.7 parts by weight, 1.2 to 16.5 parts by weight, or 1.3 to 16.1 parts by weight.

When the trivalent chromium compound is included at less than 0.5 parts by weight, a solid insoluble coating film is not sufficiently formed, so moisture penetrating into the surface of the steel sheet may not be effectively blocked, and thus corrosion resistance may not be secured.

On the other hand, when the trivalent chromium compound is included at more than 17 parts by weight, foreign matter defects may be caused by an excessive chromium content.

The trivalent chromium compound may include one or more of chromium sulfate, chromium nitrate, chromium phosphate, chromium fluoride, and chromium chloride.

The adhesion-improving agent including a silane compound is bound with a crosslinking agent and a resin and also with the steel sheet, and serves to improve the adhesiveness and corrosion resistance of a surface treatment layer. In addition, the silane compound promotes the dryness of the surface treatment layer and imparts high corrosion resistance.

The adhesion-improving agent including a silane compound may be included at 0.1 to 40 parts by weight with respect to 100 parts by weight of the solvent. The adhesion-improving agent is preferably included at 0.1 to 38 parts by weight, 0.5 to 37 parts by weight, 1 to 36 parts by weight, 1.1 to 35.9 parts by weight, or 1.2 to 35.7 parts by weight with respect to 100 parts by weight of the solvent.

When the adhesion-improving agent is included at less than 0.1 parts by weight, the adhesion with the steel sheet may not be sufficiently secured and thus corrosion resistance may not be secured.

On the other hand, when the adhesion-improving agent is included at more than 40 parts by weight, corrosion resistance may not be secured due to a large amount of unreacted silane remaining after forming a coating film.

The adhesion-improving agent including a silane compound may include one or more selected from the group consisting of vinylmethoxysilane, vinyltrimethoxysilane, vinyl epoxysilane, vinyltriepoxysilane, 3-aminopropyltriepoxysilane, 3-glycidoxypropyltrimethoxysilane, 3-metaglyoxypropyltrimethoxysilane, 3-glycidoxypropyltriethoxysilane, 3-glycidoxytrimethyldimethoxysilane, N-(3-(trimethoxysilyl)propyl)ethylenediamine (AEAPTMS), 2-(3,4-epoxycyclohexyl)ethyltrimethoxysilane, 2-(3,4-epoxycyclohexyl)ethyltriepoxysilane, 3-(2,3-epoxypropoxy)propyltrimethoxysilane, 3-(2,3-epoxypropoxy)propyltriethoxysilane, 3-(2,3-epoxypropoxy)propylmethyldiethoxysilane, 3-(2,3-epoxypropoxy)propylmethyldimethoxysilane, 3-aminopropyltriethoxysilane, 3-aminopropyltrimethoxysilane, 3-aminopropylmethyldiethoxysilane, N-(2-aminoethyl-3-aminopropyl)methyldimethoxysilane, N-(2-aminoethyl-3-aminopropyl)trimethoxysilane, diethylenetriaminopropyltrimethoxysilane, 3-ureidopropyltrimethoxysilane, and N-phenylaminopropyltrimethoxysilane.

The acidity regulator including an acid may adjust the pH of the composition for surface treatment to allow components to be stably present in the composition and appropriately react under coating conditions, thereby stably forming a coating film.

The acidity regulator including an acid may be included at 0.5 to 11 parts by weight with respect to 100 parts by weight of the solvent. The acidity regulator is preferably included at 0.8 to 10 parts by weight, 1 to 9 parts by weight, 1.1 to 8.8 parts by weight, 1.2 to 8.4 parts by weight, and 1.2 to 8.1 parts by weight with respect to 100 parts by weight of the solvent.

When the acidity regulator including an acid is included at less than 0.5 parts by weight, the pH may increase and thus the stability of the solution may be reduced. On the other hand, when the acidity regulator including an acid is included at more than 11 parts by weight, corrosion resistance may not be secured due to an excessively low pH.

The acidity regulator including an acid may include one or more of phosphoric acid, nitric acid, sulfuric acid, hydrofluoric acid, hydrochloric acid, ammonium phosphate $((NH_4)_2HPO_4, (NH_4)H_2PO_4)$, monophosphate $(NaH_2PO_4)$, diphosphate $(Na_2HPO_4)$, phytic acid, glycolic acid, lactic acid, and acetic acid.

The crosslinking agent including a silicate compound reacts with an adhesion-improving agent and a resin to increase the degree of crosslinking of the composition, thereby improving the corrosion resistance of a coated steel sheet.

The crosslinking agent including a silicate compound may be included at 2 to 20 parts by weight with respect to 100 parts by weight of the solvent. The crosslinking agent is preferably included at 2 to 19 parts by weight, 2 to 18 parts by weight, 2.2 to 17.8 parts by weight, 2.4 to 17.6 parts by weight, and 2.5 to 17.3 parts by weight with respect to 100 parts by weight of the solvent.

When the crosslinking agent including a silicate compound is included at less than 2 parts by weight, corrosion resistance may not be secured due to an insufficient degree of crosslinking of the surface treatment layer.

On the other hand, when the crosslinking agent including a silicate compound is included at more than 20 parts by weight, corrosion resistance may not be secured due to a large amount of unbound silicate remaining after forming the coating film.

The crosslinking agent including a silicate compound may include one or more of sodium silicate, calcium silicate, potassium silicate, aluminum silicate, lithium polysilicate, tetramethyl orthosilicate, and tetraethyl orthosilicate.

The vanadium-based pitting corrosion-improving agent serves to inhibit the formation of fine pitting corrosion by lowering a temperature to perform the crosslinking reaction between a resin and a crosslinking agent and an adhesion-improving agent at a low temperature.

The vanadium-based pitting corrosion-improving agent may be included at 0.1 to 14.3 parts by weight with respect to 100 parts by weight of the solvent. The pitting corrosion-improving agent is preferably included at 2 to 14.0 parts by weight, 2.5 to 13.9 parts by weight, 2.6 to 13.9 parts by weight, or 2.8 to 13.9 parts by weight with respect to 100 parts by weight of the solvent.

When the vanadium-based pitting corrosion-improving agent is less than 0.1 parts by weight, corrosion resistance may not be secured due to an insufficient degree of crosslinking of the surface treatment layer.

On the other hand, when the vanadium-based pitting corrosion-improving agent is included at more than 14.3 parts by weight, solution stability may be degraded due to an excessively high solid content.

The vanadium-based pitting corrosion-improving agent may include one or more of vanadium pentoxide ($V_2O_5$), vanadic acid ($HVO_3$), ammonium metavanadate, potassium metavanadate, sodium metavanadate, vanadium oxytrichloride ($VOCl_3$), vanadium trioxide ($V_2O_3$), vanadium dioxide ($VO_2$), and vanadium oxysulfate ($VOSO_4$), vanadium oxyoxalate [$VO(COO)_2$], vanadium oxyacetylacetonate [$VO(OC(CH_3)=CHCOCH_3)_2$], vanadium acetylacetonate [$V(OC(CH_3)=CHCOCH_3))_3$], vanadium trichloride ($VCl_3$), vanadium sulfate ($VSO_4 \cdot 8H_2O$), vanadium dichloride ($VCl_2$), and vanadium oxide (VO).

The polymer resin is added to form a solid coating layer on the surface of the steel sheet along with a trivalent chromium compound, an adhesion-improving agent, and a crosslinking agent.

It may be difficult to form a solid coating layer having excellent corrosion resistance only with an inorganic component. Accordingly, as an organic polymer resin imparting flexibility is added to the composition of the present invention, alkali resistance and pipe-forming oil infiltration may be improved by improving the action of forming a dense coating film.

With respect to 100 parts by weight of the solvent, a polymer resin may be included at 0.5 to 25 parts by weight. With respect to 100 parts by weight of the solvent, the polymer resin is preferably included at 0.7 to 23 parts by weight, 1 to 20 parts by weight, 1.8 to 18 parts by weight, 1.6 to 16 parts by weight, or 1.4 to 15.8 parts by weight.

When the polymer resin is included at less than 0.5 parts by weight, it may be difficult to secure pipe-forming oil infiltration and alkali resistance due to an insufficiently formed coating film. On the other hand, when the polymer resin is included at more than 25 parts by weight, corrosion resistance may not be secured due to a relative decrease in the content of the trivalent chromium compound.

The polymer resin is an emulsion-type resin, and may include one or more of a cationic polyurethane resin, a non-ionic polyurethane resin, a cationic acrylic resin, and a non-ionic acrylic resin.

The emulsion-type resin refers to a mixture of distilled water and a material that is not compatible with distilled water, and has excellent dispersibility and storability, so it does not cause a layer separation phenomenon even when left for a long time.

Each of the cationic polyurethane resin and the cationic acrylic resin may include a cationic functional group including one or more of primary to tertiary amino groups and a quaternary ammonium base.

For example, the cationic functional group may include one or more of an amino group, a methylamino group, an ethylamino group, a dimethylamino group, a diethylamino group, a trimethylamino group, and a triethylamino group.

The nonionic polyurethane resin may be a resin that is emulsified by a nonionic emulsifier, or may be formed using a non-ionic polyol.

The non-ionic acrylic resin may be a resin that is emulsified by a non-ionic acrylic resin, or may include one or more of non-ionic phenoxyethyl (meth)acrylate, polyethylene glycol (meth)acrylate, ethoxyethoxyethyl acrylate, phenoxy polyethylene glycol (meth)acrylate, nonylphenol polyethylene glycol (meth)acrylate, methoxy polyethylene glycol (meth)acrylate, polyethylene glycol mono(meth)acrylate, polypropylene glycol mono(meth)acrylate, polytetramethylene glycol mono(meth)acrylate, polyethylene glycol polytetramethylene glycol mono(meth)acrylate, and polypropylene glycol polytetramethylene glycol mono(meth)acrylate.

The solvent included in the composition for surface treatment of the steel sheet of the present invention may be added to dilute the components of the composition and may include one or more of ethanol, distilled water, and deionized water.

Meanwhile, the solvent is included as a remainder based on a total of 100 wt% of the composition for surface treatment of the steel sheet, and may be included at approximately 50 to 85 wt% with respect to a total of 100 wt% of the composition.

In the present invention, the composition for surface treatment of a steel sheet may be prepared by mixing and a stirring solvent, a trivalent chromium compound, an adhesion-improving agent, an acidity regulator, a crosslinking agent, a pitting corrosion-improving agent, and a polymer resin. Mixing and stirring temperatures may be 24 to 80 °C, but the present invention is not limited thereto.

Accordingly, the composition for surface treatment of a steel sheet of the present invention is a composition that includes a small amount of trivalent chromium compound, adhesion-improving agent, acidity regulator, crosslinking agent, pitting corrosion-improving agent, and polymer resin, and a large amount of solvent. The composition of the present invention has the effect of imparting corrosion resistance to the steel sheet and further improving foreign matter defects by adjusting its components and composition ratio.

A steel sheet using the composition for surface treatment of a steel sheet of the present invention is as follows.

The steel sheet includes a steel sheet base material, a zinc plating layer disposed on the steel sheet base material, and a surface treatment layer disposed on the zinc plating layer.

The steel sheet base material may use a cold-rolled steel sheet, an aluminum-plated steel sheet, an aluminum alloy sheet, a phosphate-coated zinc-plating steel sheet, or a hot-rolled steel sheet, but the present invention is not particularly limited thereto.

The zinc plating layer may be formed by a hot-dip galvanization method or electrogalvanization method.

Hot-dip galvanization is called hot-dip galva or GI, and a method in which zinc is melted by heating at high temperature and then a product to be plated is added and cooled.

Electrogalvanization is a method of adding a product to be plated to a plating solution containing zinc and plating it through electrolysis.

The surface treatment layer is a coating film formed from the composition for surface treatment of a steel sheet, and the solvent included in the composition is removed, leaving the other components.

Specifically, the surface treatment layer may be formed from a composition for surface treatment of a steel sheet, which includes 0.5 to 17 parts by weight of a trivalent chromium compound, 0.1 to 40 parts by weight of an adhesion-improving agent including a silane compound, 0.5 to 11 parts by weight of an acidity regulator including an acid, 2 to 20 parts by weight of a crosslinking agent including a silicate compound, 0.1 to 14.3 parts by weight of a vanadium-based pitting corrosion-improving agent, and 0.5 to 25 parts by weight of a polymer resin with respect to 100 parts by weight of the solvent.

Accordingly, the surface treatment layer may include a trivalent chromium compound, an adhesion-improving agent including a silane compound, an acidity regulator including an acid, a crosslinking agent including a silicate compound, a vanadium-based pitting corrosion-improving agent, and a polymer resin.

The surface treatment layer may be formed such that the trivalent chromium compound is contained at approximately 10 to 70 mg/m$^2$. The surface treatment layer is formed such that the trivalent chromium compound is contained preferably at approximately 30 to 60 mg/m$^2$.

The content of the trivalent chromium compound in the surface treatment layer may satisfy approximately 10 to 70 mg/m$^2$, and thus an advantage of exhibiting excellent physical properties may be obtained.

The surface treatment layer may be formed to approximately 0.1 to 50 $\mu$m, but the present invention is not limited thereto.

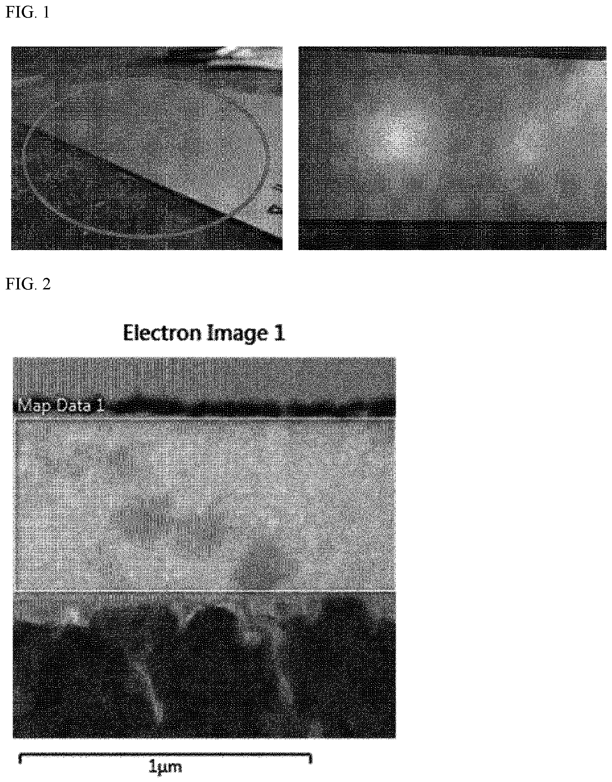

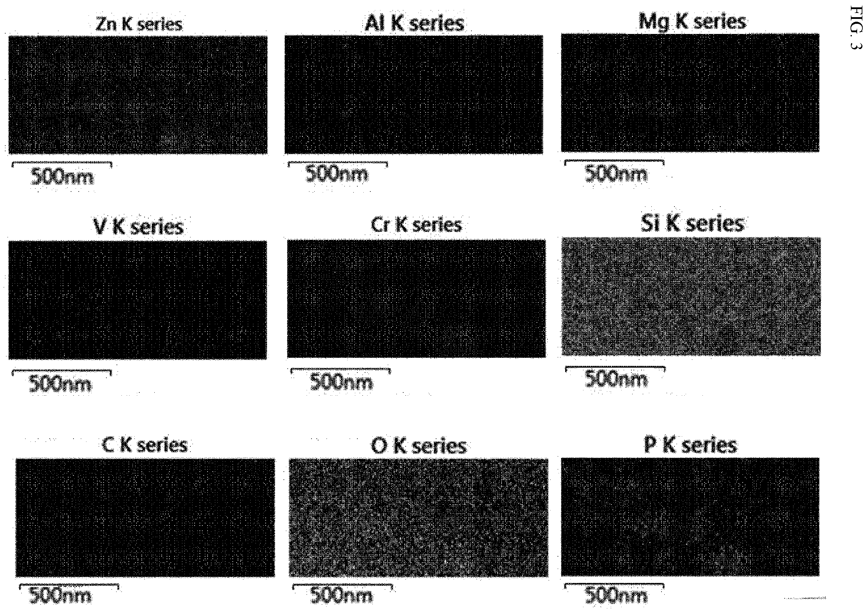

Regarding to the physical properties and component analysis of the surface treatment layer (coating layer), FIG. 2 is a photograph of the microstructure of the surface treatment layer of the present invention, and the following Table A and FIG. 3 show the results of EDS component analysis of the surface treatment layer of the present invention.

[Table A]

| Component | Wt% |
|---|---|
| C | 6.9% |
| O | 29.5% |
| Mg | 2.2% |
| Al | 0.2% |
| Si | 25.2% |
| P | 6.5% |
| V | 0.5% |

(continued)

| Component | Wt% |
|---|---|
| Cr | 17.6% |
| Fe | 0.3% |
| Co | 0.4% |
| Zn | 10.8% |
| Total: | 100% |

Referring to Table A, and FIGS. 2 and 3, the components constituting the surface treatment layer were analyzed by observing the cross-sectional shape of the surface treatment layer (coating layer).

From the analysis results, it can be confirmed that the surface treatment layer includes a trivalent chromium compound, an adhesion-improving agent including a silane compound, an acidity regulator including an acid, a crosslinking agent including a silicate compound, a vanadium-based pitting corrosion-improving agent, and a polymer resin.

A method of preparing a steel sheet of the present invention may include forming a zinc plating layer on a steel sheet base material, and coating and drying a composition for surface treatment.

A method of coating the composition for surface treatment is not limited as long as it is a coating method which is conventionally performed.

For example, the coating method may be performed by any one method of roll coating, bar coating, spraying, dipping, spray squeezing, and dip squeezing.

After coating the composition for surface treatment, drying is not limited as long as it is performed under conventional conditions.

For example, drying may be performed at approximately 40 to 200 °C.

A steel sheet using the composition for surface treatment of the present invention has $\triangle V$ of less than 20(%) when $\triangle V = (Vl - Vi)/ Vi \times 100$ (%) according to the evaluation criteria for solution stability, or does not show gelation in visual observation.

In addition, the steel sheet has a white rust generation time of 144 hours or more when measuring the white rust rate of the steel sheet in accordance with ASTM B117 based on the evaluation criteria for plate corrosion resistance.

For example, the white rust generation time may be 144 to 300 hours, 144 to 250 hours, or 144 to 200 hours.

In addition, the steel sheet has no white rust or very weak white rust according to the evaluation criteria for processed part corrosion resistance.

In addition, the steel sheet satisfies $\Delta E \leq 2$ according to the evaluation criteria for pipe-forming oil infiltration.

For example, the steel sheet may satisfy $0 < \Delta E \leq 2$, and $0 < \Delta E \leq 1.5$.

$$\triangle E = \sqrt{(L*)^2 + (a*)^2 + (b*)^2}$$

In the formula, L* denotes brightness, a* denotes green, red-based coordinates, and b* denotes yellow, blue-based coordinates (based on the CIE Lab color space).

In addition, the steel sheet satisfies $\Delta E \leq 2$ according to the evaluation criteria for alkali resistance. For example, the steel sheet may satisfy $0 < \Delta E \leq 2$ and $0 < \Delta E \leq 1.5$.

In addition, the steel sheet has 20 or fewer point defects on its surface according to the evaluation criteria for pitting corrosion resistance. For example, the number of point defects may be 0 to 20, 0 to 15, 0 to 10, 0 to 7, or 0 to 4.

In addition, the steel sheet satisfies a whiteness ($\Delta L = L_{before} - L_{after}$) of gauze after rubbing according to the evaluation criteria for foreign matter defects of $\leq 2.5$. For example, the whiteness may satisfy $0 < \Delta L \leq 2.5$, $0 < \Delta L \leq 2.0$, $0 < \Delta L \leq 1.8$, or $0 < \Delta L \leq 1.4$.

FIG. 1 is the set of photographs of a highly corrosion-resistant plated steel sheet (left) in which pitting corrosion occurs and a highly corrosion-resistant plated steel sheet (right) which is coated with a composition for surface treatment of the present invention.

Referring to FIG. 1, it can be confirmed that the surface-treated, highly corrosion-resistant plated steel sheet of the present invention has neither pitting corrosion nor foreign matter defects.

As such, specific embodiments for the composition for surface treatment of a steel sheet and a steel sheet using the same are as follows.

**1. Preparation of composition for surface treatment of steel sheet**

Examples and Comparative Examples

According to the composition ratios in Tables 1 and 2 below, first, with respect to 100 parts by weight of distilled water, phosphoric acid as an acidity regulator was added, chromium nitrate as a trivalent chromium compound was added at approximately 40 °C, and then the resulting mixture was stirred for approximately 30 minutes.

In the same manner, a composition for surface treatment was prepared by adding glycidoxypropyltrimethoxysilane as an adhesion-improving agent, potassium silicate as a crosslinking agent, ammonium metavanadate as a pitting corrosion-improving agent, and an acrylic emulsion as an organic resin every 30 minutes while stirring the resulting mixture.

[Table 1]

| Classification | Trivalent chromium compound | Adhesion-improving agent | Acidity regulator | Crosslinking agent | Pitting corrosion resistance-improving agent | Organic resin | Solvent |
|---|---|---|---|---|---|---|---|
| Example 1 | 6.0 | 10.4 | 7.5 | 10.4 | 7.5 | 7.5 | 100 |
| Example 2 | 1.5 | 7.4 | 7.4 | 14.7 | 7.4 | 9.0 | 100 |
| Example 3 | 4.9 | 1.2 | 3.7 | 2.5 | 6.2 | 4.9 | 100 |
| Example 4 | 10.7 | 35.7 | 5.4 | 14.3 | 7.1 | 5.4 | 100 |
| Example 5 | 4.2 | 11.1 | 6.9 | 13.9 | 13.9 | 1.4 | 100 |
| Example 6 | 16.1 | 29 | 1.6 | 6.5 | 6.5 | 1.6 | 100 |
| Example 7 | 9.7 | 12.9 | 8.1 | 16.1 | 4.8 | 9.7 | 100 |
| Example 8 | 4.9 | 2.5 | 1.2 | 6.2 | 6.2 | 2.5 | 100 |
| Example 9 | 1.3 | 12.7 | 1.3 | 2.5 | 2.5 | 6.3 | 100 |
| Example 10 | 15.4 | 32.7 | 5.8 | 17.3 | 5.8 | 15.4 | 100 |
| Example 11 | 12.3 | 31.6 | 3.5 | 8.8 | 4.5 | 15.8 | 100 |
| Example 12 | 6.2 | 1.2 | 4.9 | 2.5 | 4.9 | 3.7 | 100 |
| Example 13 | 5.6 | 6.9 | 4.2 | 5.6 | 6.9 | 9.7 | 100 |
| Example 14 | 6.2 | 2.5 | 1.2 | 2.5 | 2.5 | 9.7 | 100 |
| Example 15 | 4.2 | 12.5 | 1.4 | 5.6 | 6.9 | 8.3 | 100 |

[Table 2]

| Classification | Trivalent chromium compound | Adhesion-improving agent | Acidity regulator | Crosslinking agent | Pitting corrosion resistance-improving agent | Organic resin | Solvent |
|---|---|---|---|---|---|---|---|
| Comparative Example 1 | 0.1 | 18.9 | 4.4 | 14.5 | 3.0 | 4.4 | 100 |
| Comparative Example 2 | 17.4 | 1.4 | 4.3 | 2.9 | 5.8 | 13 | 100 |
| Comparative Example 3 | 3.9 | 0 | 3.9 | 10.4 | 3.9 | 7.8 | 100 |
| Comparative Example 4 | 9.3 | 46.3 | 9.3 | 11.1 | 7.4 | 1.9 | 100 |
| Comparative Example 5 | 3.7 | 5.0 | 0.4 | 11.2 | 1.2 | 2.5 | 100 |

(continued)

| Classification | Trivalent chromium compound | Adhesion-improving agent | Acidity regulator | Crosslinking agent | Pitting corrosion resistance-improving agent | Organic resin | Solvent |
|---|---|---|---|---|---|---|---|
| Comparative Example 6 | 15.5 | 25.9 | 12.1 | 10.3 | 6.9 | 1.7 | 100 |
| Comparative Example 7 | 4.9 | 31.1 | 4.9 | 1.6 | 8.2 | 13.1 | 100 |
| Comparative Example 8 | 16.7 | 6.7 | 5 | 21.7 | 3.3 | 13.3 | 100 |
| Comparative Example 9 | 2.9 | 22.9 | 2.9 | 4.3 | 0.0 | 10 | 100 |
| Comparative Example 10 | 16.4 | 31 | 1.8 | 12.7 | 14.5 | 5.5 | 100 |
| Comparative Example 11 | 8.9 | 25.1 | 3.0 | 8.9 | 1.5 | 0.4 | 100 |
| Comparative Example 12 | 20 | 40 | 6 | 4 | 4 | 26 | 100 |

## 2. Methods of evaluating physical properties and the result

For the preparation of test specimens, the test specimens were prepared using the prepared composition for surface treatment as follows.

A specimen was prepared by cutting a highly corrosion-resistant hot-dip galvanized steel sheet (Zn-Al-Mg) to 7 cm $\times$ 15 cm (width $\times$ length), degreasing the piece of sheet and performing bar coating such that the adhesion amount of a coating film is approximately 50 mg/m$^2$ based on Cr.

1) Solution stability

Immediately after preparing the coating composition prepared by the above method, an initial viscosity (Vi) was measured, the composition was stored in a 50 °C oven for 120 hours and cooled to 25 °C, and a final viscosity (Vl) at 25 °C was measured and substituted into Equation 1 below. The result was evaluated according to the evaluation criteria below.

$$[\text{Equation 1}] \quad \triangle V = (Vl - Vi)/\, Vi \times 100\ (\%)$$

<Evaluation criteria for solution stability>

O : $\Delta V$ is less than 20(%) or no gelation is visually observed

X : $\Delta V$ is 20(%) or more or gelation is visually observed

2) Plate corrosion resistance

In accordance with the method specified in ASTM B117, after treating the trivalent chromium surface treatment composition, the white rust generation rate of the steel sheet was measured over time.

<Evaluation criteria for plate corrosion resistance>

O : the white rust generation time was 144 hours or more, $\Delta$ : the white rust generation time is 96 hours or more to less than 144 hours, and X : the white rust generation time was less than 96 hours.

3) Processed part corrosion resistance

The steel sheet treated with the trivalent chromium surface treatment composition was pushed up to a height of 6 mm using an Erichsen tester, and after 24 hours, the degree of white rust was measured.

<Evaluation criteria for plate corrosion resistance>

O : when white rust did not occur or weakly occurs although white rust occurred, $\Delta$ : when weak white rust occurred in a circle and partially spread, but did not spread out of the circle, and X : when white rust occurred and spread out of the circle

4) Pipe-forming oil infiltration

The steel sheet treated with the trivalent chromium surface treatment composition was dipped in pipe-forming oil at room temperature and maintained for 24 hours, followed by measuring a color difference before/after immersion. The pipe-forming oil was used by diluting BW WELL MP-411 (Beom Woo, Korea) in 10% water.

<Evaluation criteria for pipe-forming oil infiltration>

O : $\Delta E \leq 2$, $\Delta$ : $2 < \Delta E \leq 3$, X: $3 < \Delta E$

5) Alkali resistance

The steel sheet treated with the trivalent chromium surface treatment composition was dipped in an alkali degreasing solution at 60 °C for 2 minutes, washed, followed by measuring a color difference before/after air blowing.
As the alkali degreasing solution, Fine Cleaner L 4460 A :20g/2.4L + L 4460 B 12g/2.4L (pH=12; Daehan Parkerizing) was used.

<Evaluation criteria for alkali resistance>

O : $\Delta E \leq 2$, $\Delta$ : $2 < \Delta E \leq 4$, X: $4 < \Delta E$

6) Pitting corrosion resistance

After a sprayer was used to form dew on the surface of the steel sheet treated with the trivalent chromium surface treatment composition, two steel sheets were packed facing each other and then put into a thermostat for 8 cycles of high temperature and high humidity (42 °C, 95%) for 6 hours and low temperature and low humidity (15 °C, 60%) for 6 hours, followed by counting point defects on each surface.
To count corrosive point defects, the scanning area of the steel sheet was 100*50 mm$^2$, and magnified 100 times, followed by counting only the number of defects in which the area of corrosive point defect was 29,500 $\mu$m$^2$ or more.

<Evaluation criteria for pitting corrosion resistance>

O : number of points $\leq$ 20, $\Delta$ : 20 < number of points $\leq$ 40, X : 40 < number of points

7) Foreign matter defects

To evaluate foreign matter defects of the steel sheet treated with the trivalent chromium surface treatment composition, after putting white gauze on a probe with a surface area of approximately 4cm$^2$, a weight of 10 kg was placed on the probe and rubbed back and forth 100 times, and then the whiteness ($\Delta L=L_{before}-L_{after}$) value of the gauze before and after rubbing was measured.
Here, to simulate a high humidity condition, a humidity chamber was formed and both the steel sheet and the probe were subjected to rubbing evaluation while maintaining the humidity at 95% or more using a humidifier.

<Evaluation criteria for foreign matter defects>

O : ∆L ≤ 2.5, ∆ : 2.5 < ∆L ≤ 5, X: 5 < ∆L

The results of measuring the physical properties of the prepared surface-treated steel sheet are shown in Tables 3 and 4 below.

[Table 3]

| Classification | Solution stability | Plate corrosion resistance | Processed Part corrosion resistance | Pipe-forming oil infiltration | Alkali resistance | Pitting corrosion resistance | Foreign matter defects |
|---|---|---|---|---|---|---|---|
| Example 1 | ○ | ○ | ○ | ○ | ○ | ○ | ○ |
| Example 2 | ○ | ○ | ○ | ○ | ○ | ○ | ○ |
| Example 3 | ○ | ○ | ○ | ○ | ○ | ○ | ○ |
| Example 4 | ○ | ○ | ○ | ○ | ○ | ○ | ○ |
| Example 5 | ○ | ○ | ○ | ○ | ○ | ○ | ○ |
| Example 6 | ○ | ○ | ○ | ○ | ○ | ○ | ○ |
| Example 7 | ○ | ○ | ○ | ○ | ○ | ○ | ○ |
| Example 8 | ○ | ○ | ○ | ○ | ○ | ○ | ○ |
| Example 9 | ○ | ○ | ○ | ○ | ○ | ○ | ○ |
| Example 10 | ○ | ○ | ○ | ○ | ○ | ○ | ○ |
| Example 11 | ○ | ○ | ○ | ○ | ○ | ○ | ○ |
| Example 12 | ○ | ○ | ○ | ○ | ○ | ○ | ○ |
| Example 13 | ○ | ○ | ○ | ○ | ○ | ○ | ○ |
| Example 14 | ○ | ○ | ○ | ○ | ○ | ○ | ○ |
| Example 15 | ○ | ○ | ○ | ○ | ○ | ○ | ○ |

[Table 4]

| Classification | Solution stability | Plate corrosion resistance | Processed Part corrosion resistance | Pipe-forming oil infiltration | Alkali resistance | Pitting corrosion resistance | Foreign matter defects |
|---|---|---|---|---|---|---|---|
| Comparative Example 1 | ○ | X | X | ○ | ○ | X | ○ |
| Comparative Example 2 | ○ | ○ | ○ | ○ | ○ | ○ | X |
| Comparative Example 3 | ○ | X | X | ○ | ○ | X | X |
| Comparative Example 4 | ○ | ∆ | X | ○ | ○ | X | ○ |
| Comparative Example 5 | X | X | X | X | ○ | ○ | ○ |

(continued)

| Classification | Solution stability | Plate corrosion resistance | Processed Part corrosion resistance | Pipe-forming oil infiltration | Alkali resistance | Pitting corrosion resistance | Foreign matter defects |
|---|---|---|---|---|---|---|---|
| Comparative Example 6 | ○ | Δ | X | ○ | ○ | X | ○ |
| Comparative Example 7 | ○ | Δ | X | ○ | ○ | X | X |
| Comparative Example 8 | X | X | X | X | ○ | X | ○ |
| Comparative Example 9 | ○ | ○ | Δ | ○ | ○ | X | ○ |
| Comparative Example 10 | X | X | X | X | ○ | X | ○ |
| Comparative Example 11 | ○ | ○ | X | X | X | ○ | ○ |
| Comparative Example 12 | ○ | X | X | ○ | ○ | X | ○ |

As shown in Table 3, it can be seen that Examples 1 to 15 according to the present invention have very excellent solution stability, plate corrosion resistance, processed part corrosion resistance, pipe-forming oil infiltration, alkali resistance and pitting corrosion resistance, and improved foreign matter defects.

However, as shown in Table 4, it can be seen that, in Comparative Example 1, corrosion resistance caused by a barrier effect is inferior due to an insufficient trivalent chromium compound content, so the plate corrosion resistance, the processed part corrosion resistance and the pitting corrosion resistance are insufficient.

It can be seen that Comparative Example 2 has foreign matter defects due to an excessively large content of the trivalent chromium compound.

It can be seen that, in Comparative Example 3, the content of the adhesion-improving agent is insufficient, so the plate corrosion resistance, the processed part corrosion resistance, and pitting corrosion resistance are insufficient, resulting in foreign matter defects.

In Comparative Example 4, it can be seen that processed part corrosion resistance and pitting corrosion resistance are insufficient due to remaining unreacted silane because the content of an adhesion-improving agent is excessively large.

In Comparative Example 5, it can be seen that solution stability is insufficient due to an insufficient acidity regulator content and therefore, even when coated, plate corrosion resistance, processed part corrosion resistance, and pipe-forming oil infiltration are insufficient.

In Comparative Example 6, it can be seen that processed part corrosion resistance and pitting corrosion resistance are insufficient due to an excessively large acidity regulator content.

In Comparative Example 7, it can be seen that processed part corrosion resistance and pitting corrosion resistance are sufficient and foreign matter defects occur due to an insufficient crosslinking agent content.

In Comparative Example 8, it can be seen that not only solution stability is insufficient by unbound silicate due to an excessively large crosslinking agent content, but also plate corrosion resistance, processed part corrosion resistance, pipe-forming oil infiltration, and pitting corrosion resistance are insufficient even when coated.

In Comparative Example 9, it can be seen that pitting corrosion resistance is insufficient due to an insufficient pitting corrosion-improving agent content.

In Comparative Example 10, it can be seen that solution stability is insufficient due to an excessively high pitting corrosion-improving agent content, and even when coated, plate corrosion resistance, processed part corrosion resistance, pipe-forming oil infiltration, and pitting corrosion resistance are insufficient.

In Comparative Example 11, it can be seen that processed part corrosion resistance, pipe-forming oil infiltration, and alkali resistance are insufficient because a coating film is not sufficiently formed due to an insufficient organic resin content.

In Comparative Example 12, it can be seen that plate corrosion resistance, processed part corrosion resistance, and pitting corrosion resistance are insufficient due to a relatively insufficient trivalent chromium compound content because an organic resin content is excessively large.

As above, the present invention has been described with reference to the exemplified drawings, but it is clear that the present invention is not limited by the examples and drawings disclosed herein, and can be modified in various ways by those of ordinary skill in the art within the scope of the technical idea of the present invention. In addition, even though the action effect according to the configuration of the present invention has not been clearly described while describing the examples of the present invention above, it is obvious that effects that can be predicted by the corresponding configuration should also be recognized.

## Claims

1. A composition for surface treatment of a steel sheet, comprising:

   a trivalent chromium compound;
   an adhesion-improving agent comprising a silane compound;
   an acidity regulator comprising an acid;
   a crosslinking agent comprising a silicate compound;
   a vanadium-based pitting corrosion-improving agent;
   a polymer resin; and
   a solvent.

2. The composition of claim 1, wherein the trivalent chromium compound comprises one or more of chromium sulfate, chromium nitrate, chromium phosphate, chromium fluoride, and chromium chloride.

3. The composition of claim 1, wherein the adhesion-improving agent comprising a silane compound comprises one or more of vinylmethoxysilane, vinyltrimethoxysilane, vinyl epoxysilane, vinyltriepoxysilane, 3-aminopropyltriepoxysilane, 3-glycidoxypropyltrimethoxysilane, 3-metaglyoxypropyltrimethoxysilane, 3-glycidoxypropyltriethoxysilane, 3-glycidoxytrimethyldimethoxysilane, N-(3-(trimethoxysilyl)propyl)ethylenediamine (AEAPTMS), 2-(3,4-epoxycyclohexyl)ethyltrimethoxysilane, 2-(3,4-epoxycyclohexyl)ethyltriepoxysilane, 3-(2,3-epoxypropoxy)propyltrimethoxysilane, 3 -(2,3 -epoxypropoxy)propyltriethoxysilane, 3-(2,3-epoxypropoxy)propylmethyldiethoxysilane, 3-(2,3-epoxypropoxy)propylmethyldimethoxysilane, 3-aminopropyltriethoxysilane, 3-aminopropyltrimethoxysilane, 3-aminopropylmethyldiethoxysilane, N-(2-aminoethyl-3-aminopropyl)methyldimethoxysilane, N-(2-aminoethyl -3-aminopropyl)trimethoxysilane, diethylenetriaminopropyltrimethoxysilane, 3-ureidopropyltrimethoxysilane, and N-phenylaminopropyltrimethoxysilane.

4. The composition of claim 1, wherein the acidity regulator comprising an acid comprises one or more of phosphoric acid, nitric acid, sulfuric acid, hydrofluoric acid, hydrochloric acid, ammonium phosphate ($(NH_4)_2HPO_4$, $(NH_4)H_2PO_4$), monophosphate ($NaH_2PO_4$), diphosphate ($Na_2HPO_4$), phytic acid, glycolic acid, lactic acid, and acetic acid.

5. The composition of claim 1, wherein the crosslinking agent comprising a silicate compound comprises one or more of sodium silicate, calcium silicate, potassium silicate, aluminum silicate, lithium polysilicate, tetramethyl orthosilicate, and tetraethyl orthosilicate.

6. The composition of claim 1, wherein the vanadium-based pitting corrosion-improving agent comprises one or more of vanadium pentoxide ($V_2O_5$), vanadic acid ($HVO_3$), ammonium metavanadate, potassium metavanadate, sodium metavanadate, vanadium oxytrichloride ($VOCl_3$), vanadium trioxide ($V_2O_3$), vanadium dioxide ($VO_2$), vanadium oxysulfate ($VOSO_4$), vanadium oxyoxalate [$VO(COO)_2$], vanadium oxyacetylacetonate [$VO(OC(CH_3)=CHCOCH_3))_2$], vanadium acetylacetonate [$V(OC(CH_3)=CHCOCH_3))_3$], vanadium trichloride ($VCl_3$), vanadium sulfate ($VSO_4 \cdot 8H_2O$), vanadium dichloride ($VCl_2$), and vanadium oxide (VO).

7. The composition of claim 1, wherein the polymer resin comprises one or more of a cationic polyurethane resin, a non-ionic polyurethane resin, a cationic acrylic resin, and a non-ionic acrylic resin.

8. The composition of claim 1, which comprises, with respect to 100 parts by weight of the solvent,

   0.5 to 17 parts by weight of the trivalent chromium compound;
   0.1 to 40 parts by weight of the adhesion-improving agent comprising a silane compound;
   0.5 to 11 parts by weight of the acidity regulator including an acid;

2 to 20 parts by weight of the crosslinking agent comprising a silicate compound;
0.1 to 14.3 parts by weight of the vanadium-based pitting corrosion-improving agent; and
0.5 to 25 parts by weight of the polymer resin.

9. A steel sheet comprising:

a steel sheet base material;
a zinc plating layer disposed on the steel sheet base material; and
a surface treatment layer disposed on the zinc plating layer,
wherein the surface treatment layer comprises
a trivalent chromium compound, an adhesion-improving agent comprising a silane compound, an acidity regulator comprising an acid, a crosslinking agent comprising a silicate compound, a vanadium-based pitting corrosion-improving agent, and a polymer resin.

FIG. 1

FIG. 2

## Electron Image 1

1µm

FIG. 3

## INTERNATIONAL SEARCH REPORT

| International application No. |
|---|
| **PCT/KR2021/019315** |

### A. CLASSIFICATION OF SUBJECT MATTER

**C23C 22/06**(2006.01)i; **C23C 28/00**(2006.01)i; **C23C 2/26**(2006.01)i; **C23C 2/06**(2006.01)i; **C23C 2/40**(2006.01)i; **C23F 11/18**(2006.01)i

According to International Patent Classification (IPC) or to both national classification and IPC

### B. FIELDS SEARCHED

Minimum documentation searched (classification system followed by classification symbols)

C23C 22/06(2006.01); B05D 7/14(2006.01); C09D 201/06(2006.01); C09D 4/00(2006.01); C09D 5/08(2006.01); C09D 5/10(2006.01); C09D 7/12(2006.01); C23C 22/05(2006.01); C23C 22/07(2006.01); C23C 22/08(2006.01); C23C 22/60(2006.01); C23C 22/82(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 표면처리(surface-treatment), 강판(steel sheet), 크롬화합물(chromium compound), 가교제(cross linking agent), 규산염화합물(silicate), 실란화합물(silane compound), 도금(coating)

### C. DOCUMENTS CONSIDERED TO BE RELEVANT

| Category* | Citation of document, with indication, where appropriate, of the relevant passages | Relevant to claim No. |
|---|---|---|
| Y | KR 10-2018-0135514 A (POSCO et al.) 21 December 2018 (2018-12-21)<br>See claims 1-2, 5, 7 and 9-11. | 1-9 |
| Y | KR 10-2065213 B1 (POSCO) 10 January 2020 (2020-01-10)<br>See paragraphs [0039]-[0040]. | 1-9 |
| A | US 2006-0054248 A1 (STRAUS, Martin L.) 16 March 2006 (2006-03-16)<br>See paragraphs [0007]-[0008] and [0011] and claims 1-2. | 1-9 |
| A | JP 2008-291160 A (KANSAI PAINT CO., LTD.) 04 December 2008 (2008-12-04)<br>See paragraphs [0048]-[0050] and claim 1. | 1-9 |
| A | US 2019-0242018 A1 (JFE STEEL CORPORATION) 08 August 2019 (2019-08-08)<br>See paragraphs [0035], [0042], [0055] and [0067] and claim 1. | 1-9 |

☑ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 March 2022** | **24 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

EP 4 265 820 A1

**INTERNATIONAL SEARCH REPORT**

International application No.

**PCT/KR2021/019315**

**C. DOCUMENTS CONSIDERED TO BE RELEVANT**

| Category* | Citation of document, with indication, where appropriate, of the relevant passages | Relevant to claim No. |
|---|---|---|
| A | KR 10-1786392 B1 (POSCO) 17 October 2017 (2017-10-17)<br>See claims 1-7. | 1-9 |

Form PCT/ISA/210 (second sheet) (July 2019)

18

**INTERNATIONAL SEARCH REPORT**
**Information on patent family members**

International application No.

**PCT/KR2021/019315**

| Patent document cited in search report | | | Publication date (day/month/year) | Patent family member(s) | | | Publication date (day/month/year) |
|---|---|---|---|---|---|---|---|
| KR | 10-2018-0135514 | A | 21 December 2018 | WO | 2018-230932 | A1 | 20 December 2018 |
| KR | 10-2065213 | B1 | 10 January 2020 | CN | 111601911 | A | 28 August 2020 |
| | | | | EP | 3712300 | A1 | 23 September 2020 |
| | | | | KR | 10-2019-0054283 | A | 22 May 2019 |
| | | | | US | 2020-0291527 | A1 | 17 September 2020 |
| | | | | WO | 2019-093861 | A1 | 16 May 2019 |
| US | 2006-0054248 | A1 | 16 March 2006 | None | | | |
| JP | 2008-291160 | A | 04 December 2008 | JP | 4988434 | B2 | 01 August 2012 |
| US | 2019-0242018 | A1 | 08 August 2019 | AU | 2017-342475 | A1 | 09 May 2019 |
| | | | | AU | 2017-342475 | B2 | 24 October 2019 |
| | | | | CN | 109804103 | A | 24 May 2019 |
| | | | | CN | 109804103 | B | 19 February 2021 |
| | | | | EP | 3527694 | A1 | 21 August 2019 |
| | | | | EP | 3527694 | B1 | 29 July 2020 |
| | | | | JP | 6341342 | B1 | 13 June 2018 |
| | | | | JP | WO2018-070350 | A1 | 11 October 2018 |
| | | | | KR | 10-2019-0061068 | A | 04 June 2019 |
| | | | | KR | 10-2316642 | B1 | 22 October 2021 |
| | | | | MX | 2019004155 | A | 12 June 2019 |
| | | | | PH | 12019500774 | A1 | 11 November 2019 |
| | | | | SG | 11201903215 | A | 30 May 2019 |
| | | | | TW | 201823514 | A | 01 July 2018 |
| | | | | TW | I642806 | B | 01 December 2018 |
| | | | | US | 11174556 | B2 | 16 November 2021 |
| | | | | WO | 2018-070350 | A1 | 19 April 2018 |
| KR | 10-1786392 | B1 | 17 October 2017 | CN | 109804102 | A | 24 May 2019 |
| | | | | CN | 109804102 | B | 12 March 2021 |
| | | | | EP | 3524711 | A1 | 14 August 2019 |
| | | | | EP | 3524711 | B1 | 25 August 2021 |
| | | | | JP | 2019-536899 | A | 19 December 2019 |
| | | | | JP | 6806892 | B2 | 06 January 2021 |
| | | | | US | 10822705 | B2 | 03 November 2020 |
| | | | | US | 2019-0264334 | A1 | 29 August 2019 |
| | | | | WO | 2018-070720 | A1 | 19 April 2018 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060123628
- KR 1020050052215
- KR 1020090024450
- KR 1020040046347
- JP 2002069660 A